(19) **Europäisches Patentamt European Patent Office Office européen des brevets**

(11) **EP 3 967 098 B1**

(12) **EUROPEAN PATENT SPECIFICATION**

(45) Date of publication and mention
of the grant of the patent:
**11.03.2026 Bulletin 2026/11**

(21) Application number: **19731719.1**

(22) Date of filing: **17.06.2019**

(51) International Patent Classification (IPC):
***H04W 74/0816*** *(2024.01)*

(52) Cooperative Patent Classification (CPC):
**H04W 74/0816**

(86) International application number:
**PCT/EP2019/065907**

(87) International publication number:
**WO 2020/253943 (24.12.2020 Gazette 2020/52)**

(54) **DEVICE AND METHOD FOR GAINING ACCESS TO A MEDIUM OF A WIRELESS NETWORK**

VORRICHTUNG UND VERFAHREN ZUR ZUGANGSKONTROLLE ZU EINEM MEDIUM EINES DRAHTLOSEN NETZWERKS

DISPOSITIF ET PROCÉDÉ POUR OBTENIR L'ACCÈS À UN SUPPORT DE RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.03.2022 Bulletin 2022/11**

(73) Proprietor: **Huawei Technologies Co., Ltd.
Longgang District
Shenzhen,
Guangdong 518129 (CN)**

(72) Inventors:
• **EZRI, Doron**
  **80992 Munich (DE)**
• **PATURY, Shahar**
  **80992 Munich (DE)**
• **HENCINSKI, Oren**
  **80992 Munich (DE)**
• **KLAUSNER, Ohad**
  **80992 Munich (DE)**
• **JIANG, Xingfeng**
  **80992 Munich (DE)**
• **WEITZMAN, Avi**
  **80992 Munich (DE)**

(74) Representative: **Roth, Sebastian
Mitscherlich PartmbB
Karlstraße 7
80333 München (DE)**

(56) References cited:
**US-A- 5 553 072       US-A1- 2004 002 357
US-A1- 2008 013 522**

**Description**

TECHNICAL FIELD

The present invention relates generally to the field of wireless communication networks, and, more particularly, to a device performing an access method to gain access to a medium of a wireless network, and to a corresponding method. The present invention addresses communication systems that uses Listen Before Talk (LBT) access method to access unsilenced bands, for example, the IEEE 802.11, a Fifth Generation (5G) equipment, etc.

BACKGROUND

Generally, the IEEE 802.11 based Wireless Local Area Networks (WLANs) became popular at an unprecedented rate. The conventional WLAN supports a variety of data transfer including (and not just) file transfer, emails, web browsing and real time applications such as audio and video. The IEEE 802.11 (Wi-Fi) defines several unlicensed bands (for example, 2.4GHz, 5GHz and 6GHz). Moreover, in order to increase the system capabilities (capacity), several Access Points and Base Stations (APs/BSs) may share the same space, however, they may use different channel(s) to minimize the interference. In addition, since in many distributions (i.e. HD/VHD distribution) the number of APs/BSs is usually larger than the number of available channels, several APs/BSs may be assigned the same channel. The IEEE 802.11 standard defines two access methods, the Distributed Coordination Function (DCF) access method and the Point Coordination Function (PCF) access method. The vast majority of IEEE 802.11 devices (up to 11ax) use the DCF access methods. The DCF uses a Carrier-Sense Multiple Access with Collision Avoidance (CSMA/CA) algorithm, which is a simple access algorithm that was one of the major contributors to the Wi-Fi huge success.

The ETSI EN 301 893 standard defines two access methods for Frame Based Equipment (FBE) and Load Based Equipment (LBE). Furthermore, the LBE access method is similar to 802.11 DCF/EDCA access method.

The access delay of DCF method depends on many parameters, for example, the number of active devices sharing the same channel and space, the data frame length, the physical layer (PHY) data rate, a working mode (e.g., Request to Send (RTS)/Clear to Send (CTS), etc.), Quality of Service (QoS) parameters, a collision rate, the interference level, etc.

Conventionally, the plain vanilla DCF is considered as the best effort access method, since, by nature, it gives equal access opportunity to all devices that share the medium. In addition, in order to increase the wireless throughput, the 802.11 Task Groups (TGs) maximize the spectral efficiency by adding the Multiple-Input and Multiple-Output (MIMO) technologies, using higher modulations (e.g., 1KQAM) and a wider bandwidth (e.g., 40MHz, 80MHz and 160MHz). These efforts have been (extremely) successful, as it is seen by the continued growth of data rates in the WLAN and the cellular standards. However, the gain comes at the cost of secondary system parameters, such as latency, that do not fit directly into information theory's current framework. This is seen as an acceptable tradeoff as long as the user experience is not impacted, for example, for WEB browsing, file downloading, etc. Although initially WLAN as IEEE802.11designed for simple applications, it became a victim of its own success. Many applications use today the WLAN (e.g., video, audio, AR, VR, etc.), and many new applications may require higher data rates with shorter delay/latency.

A communication network's (e.g., LAN or WLAN) latency has both deterministic and random components that are either fixed or scale with the number of the nodes in the system. For instance:

- The deterministic components set the minimum latency, while the random components shape the latency's distribution. Deterministic latency components include the time to transmit information and overhead (i.e., parity bits, reference signals, and control data), constant length hardware computations, and wait times between transmissions.

- The random components include the time to retransmit information and overhead when necessary, queuing delays, random wait times between transmissions, variable length hardware computations, and software computations for higher layer functions. The importance of each component on overall network latency may depend on the standard and implementation.

Furthermore, the WLAN has high latency relative to the LAN systems, for example, may be because of shared medium access that needs to avoid corrupting other devices data. The Wi-Fi overhead may be deterministic or random, as follow:

- Deterministic: the access time (Arbitration Inter-Frame Spacing (AIFS)), PHY headers (preamble) and acknowledgement (ACK). The Wi-Fi deterministic overhead are $90\mu s$ to $127\mu s$ for each data access (one or more packet). On top of this, every data packet contains PHY headers ($20\mu s$ to $108\mu s$), cyclic prefixes (10% or 5%) and idle symbols between aggregation (0 to 8μs)

- Random:

    ◦ Back-off: before a packet is sent, a node must wait for random back-off time. The back-off is a random number between 0 and Contention Window (CW) (9μs to 9ms). As the number of nodes increases, the chances of collision (2 or more nodes having the same back-off) increase, which increases the probability of re-Tx (hereinafter Tx and transmission is used interchangeably) of the packet. In order to reduce the collision probability, it may be required to increase the contention window, which increases the access time.
    ◦ Re-transmission (re-Tx): when a receiver does not succeed to decode a packet (collision, noise, or fading), a new packet must be sent, this increases the medium load and the packet delay.
    ◦ Transmission (Tx) time: while a node transmits, all other nodes need to suspend their access to the medium, i.e., back-off process (wait at least DIFS again) and wait until medium is idle again. The new 11Tg requires long transmissions in order to have reasonable efficiencies when working with high PHY rates, ex. 11ac 1.7Gbps rate achieves about 75% efficiency with Tx time of 1400μs.

For the Wi-Fi delay when n nodes shares the media, the average delay may be determined according to Eq. (1):

$$\frac{1}{2} \cdot \sum_{i=0}^{n} \left( \frac{CW_i \cdot Slot}{2 \cdot (1 - 2 \cdot PER_i)} + \frac{(AIFS + \mathrm{Pr}otocolOverheads_i + TxTime_i + SIFS + AckTime_i)}{(1 - PER_i)} \right) \qquad \text{Eq. (1)}$$

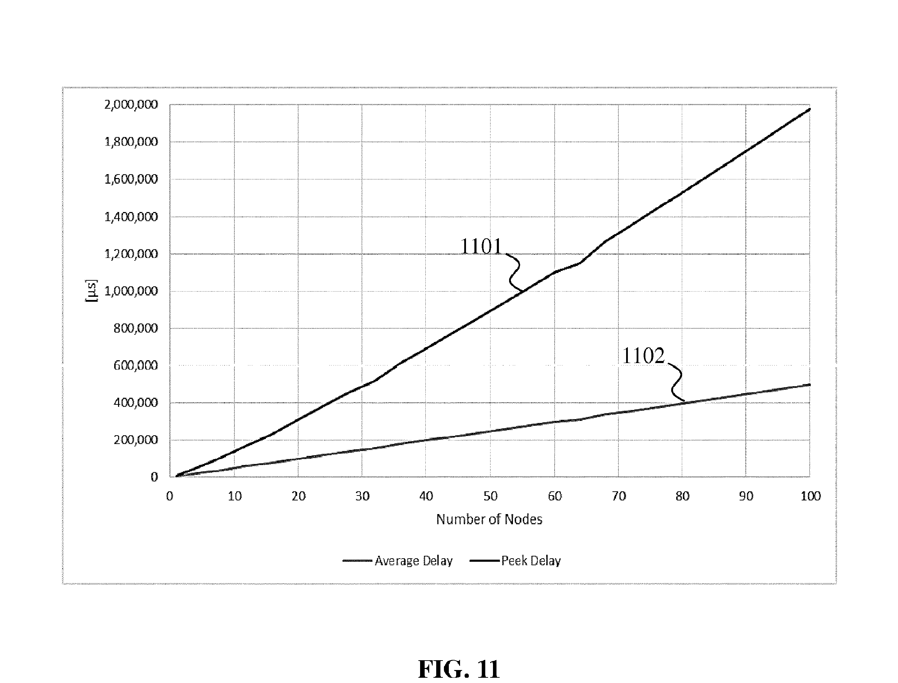

FIG. 11 illustrates the Wi-Fi delay versus number of nodes for a conventional Wi-Fi system. The conventional Wi-Fi system is capable of supporting high data rates (1Gbps to 10Gbps) with unbound delay which limits the usage of RT application such as the live video Augmented Reality (AR) and Virtual Reality (VR) over the Wi-Fi. Moreover, the Wi-Fi average delay 1102 is usually low (<4ms), however, the peek delay 1101 (jitter) may increase to more than 100ms. Major factor that cause the delay are:

- Number of Re-Tx: The 802.11 includes many techniques to reduce the re-Tx probability (e.g., dynamic Tx power, dynamic rate control, beam-forming, smart antenna etc.).
- Access time (particularly in congestion medium - large number of nodes with high data load): the 802.11 uses Enhanced Distributed Channel Access (EDCA) and Orthogonal Frequency-Division Multiple Access (OFDMA) in order to limit/bound the delay, those technique cannot limits the peek delay 1101.

However, many emerging time sensitive applications require a predictable and more accurate time synchronization. This usually requires low(er) latency. Furthermore, the reliability requirements vary per application, however, some need a predictable worst case latency with a high reliability (>98%). Table I describes examples of some new emerging applications and their worst case latency and throughput requirement.

*Table I: Examples of new emerging applications and their worst case latency and throughput requirement.*

| Application | Worst Case Latency* | Throughput Requirement |
|---|---|---|
| Wireless VR | 5 msec | High |
| Immersive VR & Pro Gaming | 1- 10 msec | High |
| High Quality Wireless AV | 10 - 20 msec | Moderate to High |
| Robotics, Autonomous Systems and Industrial Control | 250 μsec - 50 msec | Moderate to Low |

- The 802.11 EDCA prioritization (QoS): this method enables prioritizing the traffic (VO, VI, BE, BK) by changing the CSMA/CA access parameters (AIFS, $CW_{min}$, $CW_{max}$). The EDCA access gives statistical access priority, therefore, the technique neither bounds the delay nor the jitter in a congested medium. Furthermore, using the high priority QoS parameters (VO/VI) in the congested environment may increase the probability for the re-Tx (particularly when not all of devices support the EDCA).

- The 802.11 PCF cell coordination access: although this technique provided a good access time, however, it was removed from 802.11 by 802.11ax task group.

- The OFDMA cell coordination: this method enables very short delays only when all devices that shares the same channel supports trigger frame access. It has been predicted that until the year 2022, less than half of the Wi-Fi devices will support OFDMA triggered access, and the OFDMA is not considered as a practical solution for the next 5 to 10 years.

US 2004002357 AI discloses a method for addressing the problem of uplink capture, which arises in a multiple-cell wireless LAN using directional antennas, by requiring all (non-access point) stations to release a channel at prespecified times.

SUMMARY

In view of the above-mentioned challenges and disadvantages, embodiments of the present invention aim to improve the conventional devices and methods. An objective is to provide a device and method for performing an access method, in order to gain access to a medium of a wireless network, with reduced latency. In particular, the device should be able to guarantee a certain access time.

The objective is achieved by the embodiments provided in the enclosed independent claims. Advantageous implementations of the embodiments are further defined in the dependent claims. In the following, parts of the description and drawings referring to embodiments not covered by the claims, are not part of the invention, but are illustrative examples necessary for understanding the invention.

In particular, embodiments (device and method) of the invention guarantee a certain 802.11/ETSI EN 301 893 LBE or any other LBE access method, access time (for example, when using DCF or EDCA, without limiting the present invention).

A first aspect of the invention provides a device for a wireless network, wherein the device is configured to perform an access method, using a plurality of nodes, to gain access to a medium of the wireless network, wherein each node is associated with a different channel of the medium and the access method is performed by using separately each node, transmit data using an active node of the plurality of nodes that has gained access to the medium, and if another node also gains access to the medium after a determined time period from the access of the active node, control the active node to release the medium and to start the access method again, and control the other node to start transmitting data, wherein the device is characterized by being configured to determine an average access delay time for each node, and the determined time period of the active node being based on the average access delay times of the other nodes.

The device of the first aspect can perform the access method by using the plurality of nodes, in order to gain access to the medium of the wireless network. In some embodiments, the device may comprise the plurality of nodes. In some embodiments, the device may comprise at least one node. In some embodiments the device may use the nodes and the nodes may not be (e.g., necessary) incorporated in the device, without limiting the present disclosure to a specific configuration of the device.

The device of the first aspect may, for example, utilize the diversity capability on the medium access procedure (e.g., the CSMA/CA). For instance, it may be possible, if a single node cannot guarantee a certain access time that the access time may be guaranteed by more than one node. For example, two devices of the first aspect may establish a link, and may communicate over this link by using a plurality of parallel virtual links. Each node of each device is in this case associated with one virtual link of the link. Moreover, at least one of the virtual links or nodes may be active (transmits/receives). Furthermore, by extending the node usage (using 802.11 TxOP), the probability that one of the other nodes accesses the medium may be increased, and the active collection between the two devices over the link (including the virtual links provided by the plurality of nodes) may further be preserved.

The device of the first aspect may have the advantage of enabling to bond the delay and Jitter of a WLAN system down to few ms, and may further enable the usage of RT, AR and VR applications, etc.

Moreover, the device may comprise a circuitry, which may further comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

Moreover, some embodiment of the invention, may enable low delay guarantee over a WLAN link (using unlicensed bands) to another device by keeping active communication by combining two or more virtual links (by using multiple nodes). Each of the virtual links implements accessing and using the medium, separately, and may continue maintaining the medium occupied, until one of the other virtual links uses the medium, etc.

In an implementation form of the first aspect, the device is further configured to, if another node also gains access to the medium before the determined time period from the access of the active node, control the other node to release the medium.

This is beneficial, since it may be possible to minimal the overhead on the full network exist load. For example, in some embodiments, the overhead may be decreased to a lower than <15%.

In a further implementation form of the first aspect, the device is further configured to, if two or more nodes gain access to the medium at the same time, control all of the two or more nodes except the node having the best performance to release the medium.

In a further implementation form of the first aspect, the device is further configured to constantly perform the access method with each node that has no access to the medium.

In a further implementation form of the first aspect, the device is further configured to delay the release of the medium by the active node and the start of transmitting data using the other node, until a current transmission of the active node is complete.

In a further implementation form of the first aspect, the device is further configured to delay the release of the medium by the active node and the start of transmitting data using the other node, until all node procedures of gaining access to the medium and/or releasing the medium are complete.

In a further implementation form of the first aspect, the device is further configured to generate an access Cumulative Distribution Function, CDF, for each node based on its average access delay time, and share the access method CDFs among the nodes.

In a further implementation form of the first aspect, the device is further configured to determine whether the determined time period has passed or not based on the CDFs of the nodes.

In a further implementation form of the first aspect, the device is further configured to determine a transmission time for each node, and control the active node to send "IDLE" frames after the actual data transmission time that is determined for the active node has passed.

In a further implementation form of the first aspect, the device is further configured to determine the transmission time for each node based on CDF of other nodes and on an access time reliability requirement.

In a further implementation form of the first aspect, the access method is based on a CSMA/CA method or ETSI EN 301 893 LBE access method and/or any other LBE access method.

In a further implementation form of the first aspect, each node is associated with a virtual link to at least one other device.

A second aspect of the invention provides a system comprising a first device according to the first aspect or one of the implementation form of the first aspect, and a second device according to the first aspect or one of the implementation form of the first aspect, wherein each node of the first device, which is associated with a given channel of the medium, is connected over a virtual link with a node of the second device, which is associated with the same given channel.

A third aspect of the invention provides a method performed by a device for a wireless network, wherein the method comprises performing an access method, using a plurality of nodes, to gain access to a medium of the wireless network, wherein each node is associated with a different channel of the medium and the access method is performed by using separately each node, transmitting data using an active node of the plurality of nodes that has gained access to the medium, and if another node also gains access to the medium after a determined time period from the access of the active node, controlling the active node to release the medium and to start the access method again, and controlling the other node to start transmitting data, wherein the method is characterized by determining an average access delay time for each node, and the determined time period of the active node being based on the average access delay times of the other nodes.

In an implementation form of the third aspect, the method further comprises, if another node also gains access to the medium before the determined time period from the access of the active node, controlling the other node to release the medium.

In a further implementation form of the third aspect, the method further comprises, if two or more nodes gain access to the medium at the same time, controlling all of the two or more nodes except the node having the best performance to release the medium.

In a further implementation form of the third aspect, the method further comprises constantly performing the access method with each node that has no access to the medium.

In a further implementation form of the third aspect, the method further comprises delaying the release of the medium by the active node and the start of transmitting data using the other node, until a current transmission of the active node is complete.

In a further implementation form of the third aspect, the method further comprises delaying the release of the medium by the active node and the start of transmitting data using the other node, until all node procedures of gaining access to the medium and/or releasing the medium are complete.

In a further implementation form of the third aspect, the method further comprises generating an access Cumulative Distribution Function, CDF, for each node based on its average access delay time, and share the CDFs among the nodes.

In a further implementation form of the third aspect, the method further comprises determining whether the determined time period has passed or not based on the CDFs of the nodes.

In a further implementation form of the third aspect, the method further comprises determining a transmission time for each node, and controlling the active node to send "IDLE" frames after the actual data transmission time that is determined for the active node has passed.

In particular, the "IDLE" frames may be predefined, for example, it may be some predefined information (i.e., data) being transmitted.

In a further implementation form of the third aspect, the method further comprises determining the transmission time for each node based on the access time CDF of other nodes and on an access time reliability requirement.

In a further implementation form of the third aspect, the access method is based on a CSMA/CA or ETSI EN 301 893 LBE access method and/or any other LBT access methods

In a further implementation form of the third aspect, each node is associated with a virtual link to at least one other device.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which

FIG. 1      is a schematic view of a device for a wireless network, according to an embodiment of the present invention.

FIG. 2      is a schematic view of a system comprising a first device and a second device, according to an embodiment of the present invention.

FIG. 3      exemplarily illustrates access Cumulative Distribution Function (CDF) probability for seven nodes as a function of the delay time.

FIG. 4      illustrates the maximal delay at 99% for each node from the seven nodes of FIG. 3.

FIG. 5      exemplarily illustrates access CDF probability for a set of combined nodes as a function of the delay time.

FIG. 6      is another exemplarily illustration of access CDF probability for six nodes as a function of the delay time.

FIG. 7      illustrates the maximal delay at 99% for each node from the six nodes of FIG. 6.

FIG. 8      is another exemplarily scheme of the system comprising the first device and the second device, according to an embodiment of the present invention.

FIG. 9      is a flowchart of performing an access method using the plurality of nodes, according to an embodiment of the present invention.

FIG. 10      is a flowchart of a method performed by a device for a wireless network, according to an embodiment of the invention.

FIG. 11      illustrates the Wi-Fi delay versus number of nodes for a conventional Wi-Fi system.

DETAILED DESCRIPTION OF EMBODIMENTS

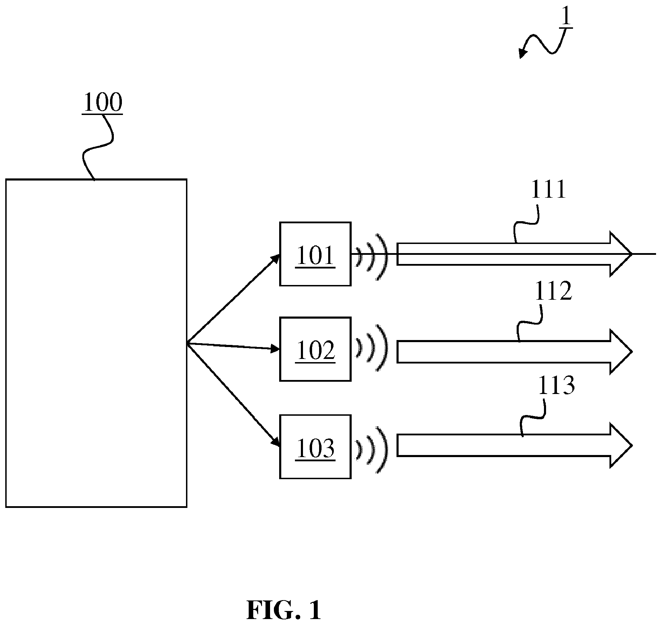

FIG. 1 is a schematic view of a device 100 for a wireless network 1, according to an embodiment of the present invention.

The device 100 is configured to perform an access method, using a plurality of nodes 101, 102, 103, to gain access to a medium of the wireless network, wherein each node 101, 102, 103 is associated with a different channel 111, 112, 113 of the medium and the access method is performed by using separately each node 101, 102, 103.

The device 100 is further configured to transmit data using an active node 101 that has gained access to the medium. In the embodiment of FIG. 1, it is exemplarily illustrated that the node 101 is an active node, without limiting the present disclosure.

The device 100 is further configured to, if another node 102, 103 also gains access to the medium after a determined time period from the access of the active node 101, control the active node 101 to release the medium and to start the access method again, and control the other node 102, 103 to start transmitting data.

The device 100 of FIG. 1 may comprise a circuitry (not shown in FIG. 1), the circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

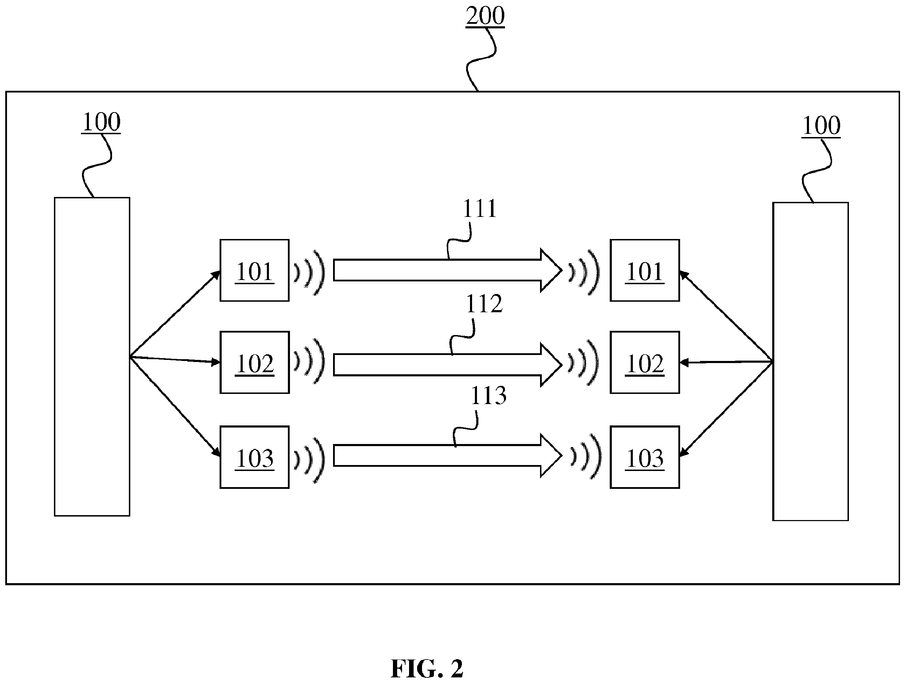

FIG. 2 is a schematic view of a system 200 comprising a first device 100 and a second device 100, according to an embodiment of the present invention.

Without limiting the present disclosure, it is assumed that the device 100 of the FIG. 1 is incorporated in the system 200 (e.g., as the first device and/or the second device). The system 200 comprises a first device 100. The system 200 further comprises a second device 100.

Moreover, each node 101, 102, 103 of the first device 100, which is associated with a given channel 111, 112, 113 of the medium, is connected over a virtual link with a node 101, 102, 103 of the second device 100, which is associated with the same given channel 111, 112, 113. The totality of the virtual links forms a link between the first device 100 and the second device 100.

As discussed, the conventional wireless network (like IEEE802.11 or any other LBT) cannot guarantee the traffic delay nor bound the traffic jitter. The device (and/or the method disclosed in the present invention) may guarantee the access time when using DCF or EDCA or LBE access method. For example, the device 100 may enable low delay guarantee over the 802.11 WLAN link by keeping active communication by combining two or more virtual links (by virtue of the plurality of nodes 101). Each of the nodes may perform the access method to gain access to the medium, separately, and may continue maintaining the medium busy, until one of the other nodes (of another virtual link) access the medium.

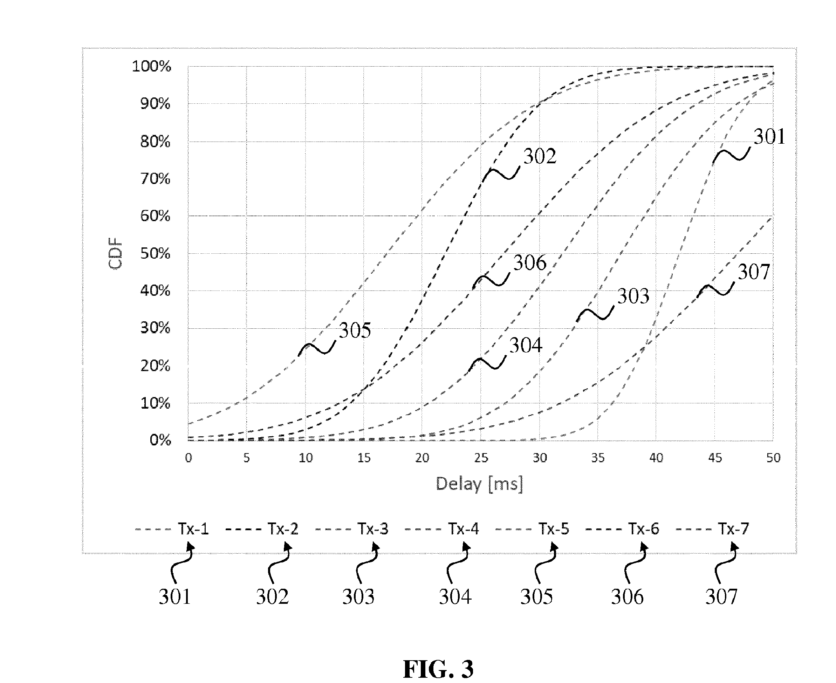

FIG. 3 exemplarily illustrates access CDF probability for seven nodes as a function of the delay time.

It is assumed that, there are seven virtual links between two devices. The seven virtual links (corresponding to seven nodes 101 for each device 100) includes Tx-1 with an access CDF probability 301, Tx-2 with an access CDF probability 302, Tx-3 with an access CDF probability 303, Tx-4 with an access CDF probability 304, Tx-5 with an access CDF probability 305, Tx-6 with an access CDF probability 306, and Tx-7 with an access CDF probability 307) may be between two devices 100 (for example, a first device 100 and a second device 100).

Moreover, the virtual link 5 for Tx-5 (with its access CDF probability 305) has 25% access delay of 10ms which is the lowest access delay. The virtual link 1 for Tx-1 (with its access CDF probability 301) may guarantee 38ms at 25% probability. Furthermore, the access time for both virtual link 2 for Tx-2 (with its access CDF probability 302) and the virtual link 3 for the Tx-3 (with its access CDF probability 303) is higher than 15ms at 25% probability.

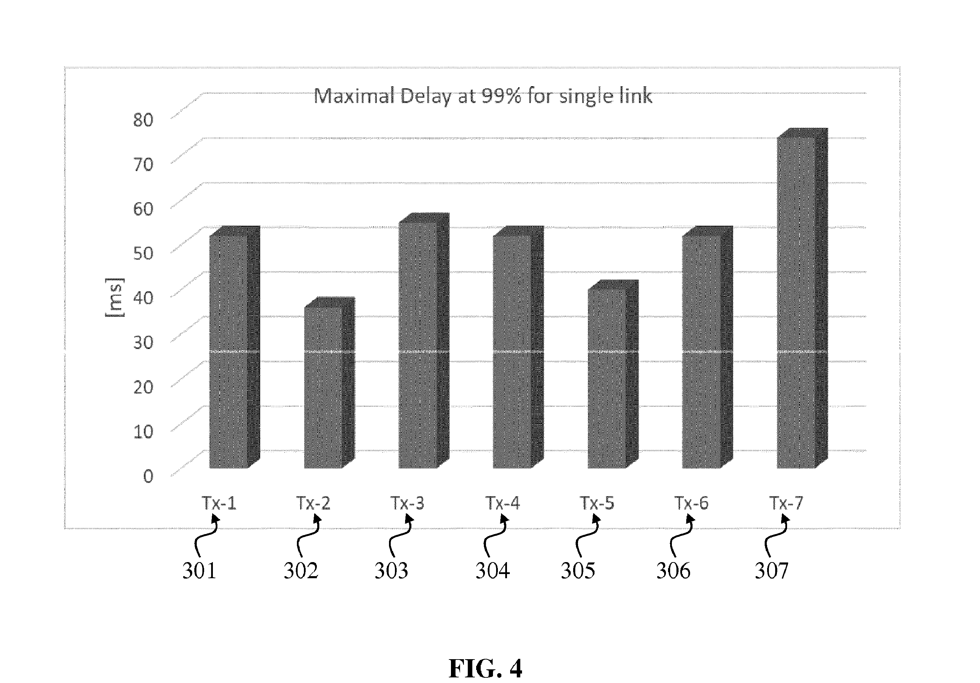

FIG. 4 illustrates the maximal delay at 99% for each node 101 from the plurality of nodes 101 of FIG. 3. The guaranteed delay (i.e, @99%) of each of the virtual links (i.e., for the nodes 101 of the FIG. 3) is illustrated in FIG. 4

As it is shown, the virtual link 2 for the Tx-2 (with the access CDF probability 302) may guarantee a maximal delay of 34ms with 99% probability, while the virtual link 5 for the Tx-5 (with the access CDF probability 305) may guarantee only 39ms, etc.

It may be derived from FIG. 4 that:

- The above virtual links cannot individually support application that requires bounded delay of less than 30ms.
- Only virtual link 2 (Tx-2) and the virtual link 5 (Tx-5) supports application that requires bounded delay of less than 40ms.
- Virtual link 1 (Tx-1) may guarantee a delay of 51ms.
- Virtual link 7 (Tx-7) cannot support application that requires bounded delay of less than 70ms.

In some embodiments, a lower delay may be obtained based on combining more or all of the above virtual links.

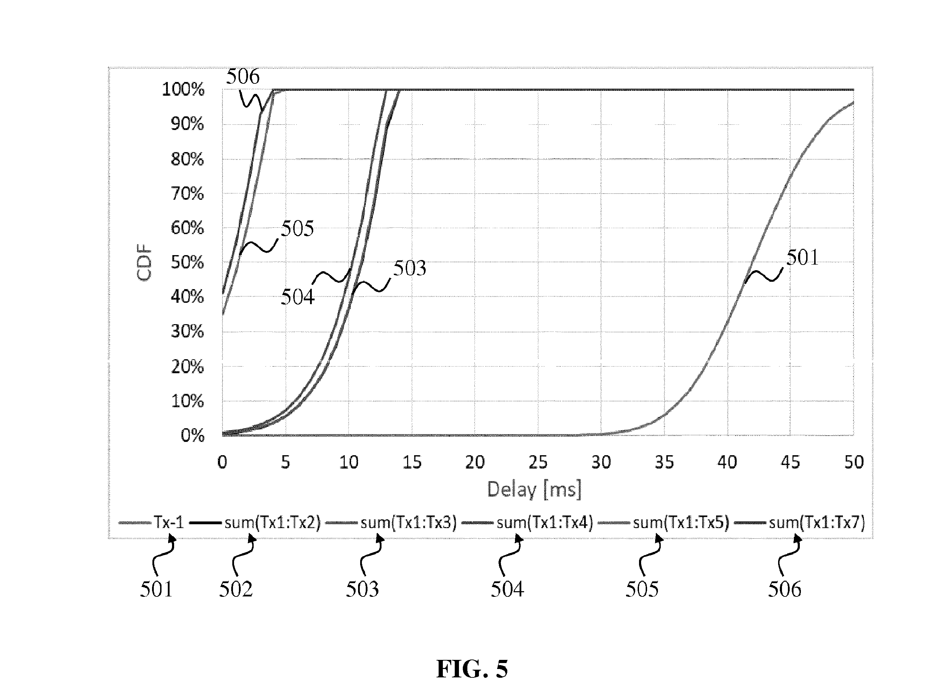

FIG. 5 illustrates access CDF probability for combined nodes 101 as a function of the delay time.

As it can be derived from FIG. 5, the sum (Tx1:Tx3) indicated with reference number 503 represents combining virtual link 1 with virtual link 2 and virtual link 3, and it may guarantee 15ms delay time at 99% (vs above 15ms @25% for those virtual links).

Moreover, the sum (Tx1:Tx5) indicated with reference number 505 represents combining virtual links 1 to 5, and it may guarantee the delay time of less than 5ms with a probability of @99%, which may suitable for most of the RT applications.

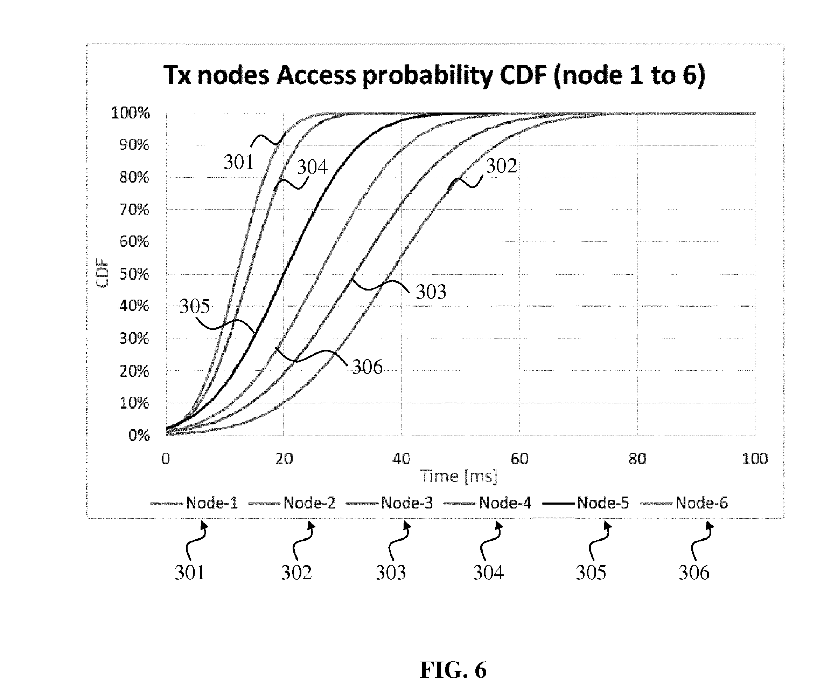

FIG. 6 is another exemplarily illustration of access CDF probability for six nodes 101 as a function of the delay time.

It is assumed that, there are six virtual links (corresponding to six nodes 101) (including Tx-1 with the access CDF probability 301, Tx-2 with the access CDF probability 302, Tx-3 with the access CDF probability 303, Tx-4 with the access CDF probability 304, Tx-5 with the access CDF probability 305 and Tx-6 with the access CDF probability 306) between the two devices 100 (for example, a first device 100 and a second device 100).

Moreover, as it can be derived from FIG. 6, the above virtual links cannot guarantee individually a delay of less than 20ms at 99.9%.

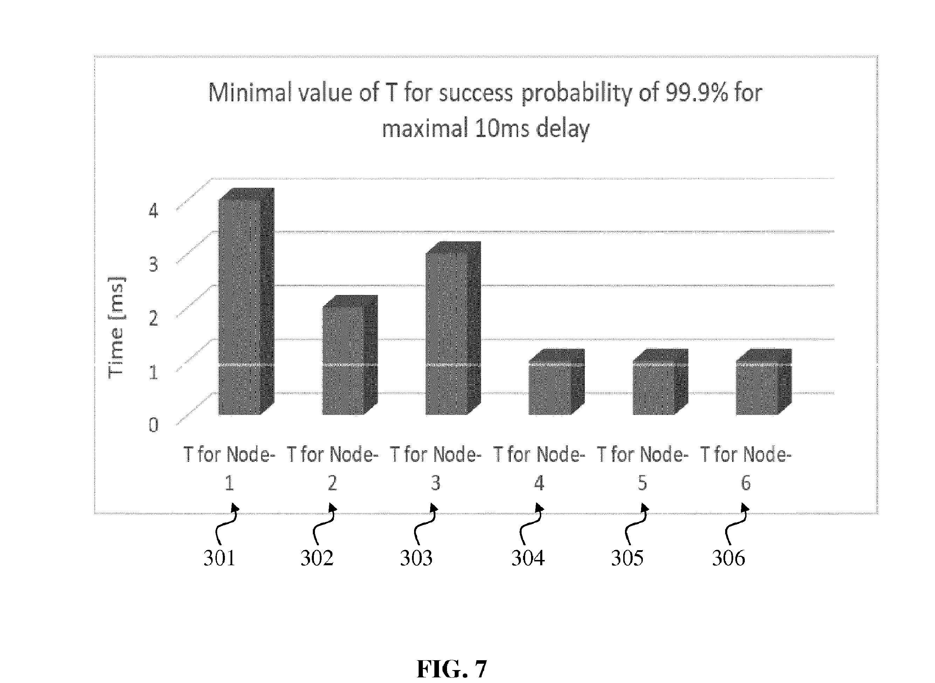

Furthermore, assuming that an application requires a maximal delay of 10ms, the TxOP for all the six virtual links of FIG. 6 is illustrated in FIG. 7.

As it can be derived from FIG. 7, a TxOP of less than 4ms may provide the 10ms delay time by using the above virtual links.

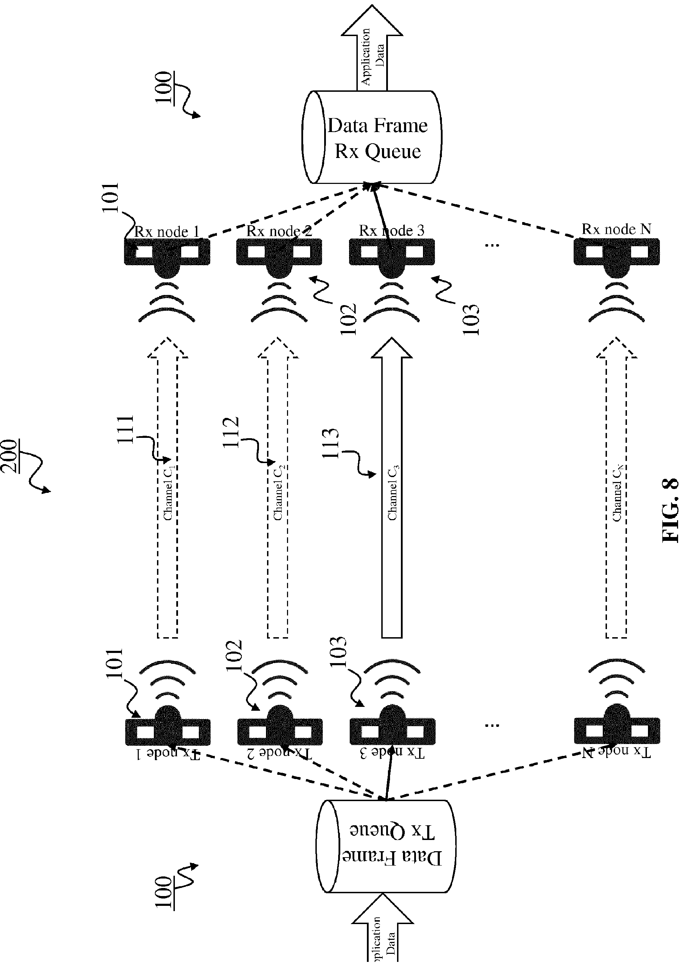

FIG. 8 which is another exemplarily scheme of the system 200 comprising the first device 100 and the second device 100, according to an embodiment of the present invention.

In the exemplarily scheme of the system 200 in FIG. 8, N (N≥2) virtual links are illustrated to form a link between the two devices 100. Accordingly, each device uses N nodes 101. Moreover, in order to overcome the inability of the WLAN (that uses LBT access method) to guarantee an access, a constant active (virtual) link is kept between at least one node 101 of each device 100, for example, at least one of the virtual links is active.

Moreover, each virtual link (from the above N) may be using different overlap or non-overlap channels, while performing the access method, simultaneously, using the CSMA/CA and the RTS/CTS technique (e.g., to prevent collisions on data). Furthermore, the first Tx node 101 that gains access to the medium (also referred to as the pivot Tx) may start sending the data for the TxOP period of T [ms]. Moreover, when another Tx node 101 gains access to the medium (after RTS/CTS) after that the pivot Tx has gained access, one of the following scenarios may occur:

- If the time period between the current pivot and the Tx node 101 that accesses the medium is larger than K, the Tx node 101 will become the pivot Tx, after the current pivot Tx finishes the current aggregation transmission (and start the access procedure).
- Otherwise it releases the NAV (sends a control frame with short NAV) and starts the access procedure again.

However, when more than one nodes 101 gains access to the medium at the same time, the pivot Tx will be the node 101 associated with the virtual link having the best performance, and the other nodes 101 should release the NAV.

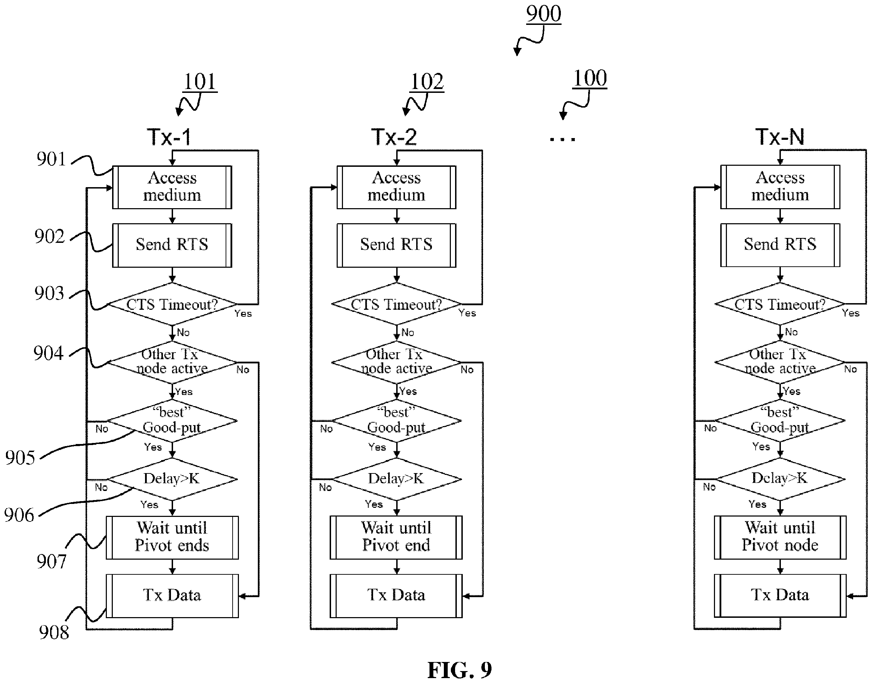

FIG. 9 is a flowchart of performing an access method 900 using the plurality of nodes 101, 102... Tx-N, according to an embodiment of the present invention.

The method may be performed by the device 100 (and/or the system 200 and/or the first device 100 of the system 200 and/or the second device 100 of the system 200).

Without limiting the present disclosure, in the following the method 900 is exemplarily discussed based on being performed by the node 101 (e.g., node Tx-1 in FIG. 9) of the device 100.

At 901, the node Tx-1 (e.g., node 101) accesses the medium of the wireless network.

For example, each node 101 may collect access delay time and build its access as a list of short time period steps (e.g., $\Delta t=1ms$), this CDF access function is further shared with all of the other nodes 101. Each node 101 may calculate its minimal Tx time (Tm) and may return to the IDLE period ($K_m$). When the RT application is activated, all the nodes 101 may start the access procedure to the medium.

At 902, the node Tx-1 (e.g., node 101) sends the request to send parameters.

At 903, the node Tx-1 (e.g., node 101) determines if the CTS is Timeout or not. When it is determined "Yes", the node Tx-1 goes back to the step 901. However, when it is determined "No", the Tx-1 goes to step 904.

At 904, the node Tx-1 (e.g., node101) determines if other Tx nodes are also active or not. When it is determined "Yes", the node Tx-1 goes to step 905. However, when it is determined "No", the Tx-1 goes to step 908.

For example, the first node 101 that accesses the medium (called a Pivot node) starts sending the application packets. Moreover, if more than one node 101 accesses the medium, the "best" node 101 is selected.

Moreover, an access process may include, for example, AIFS, BEB, Tx of RTS and Rx of CTS.

At 905, the node Tx-1 (e.g., node101) determines if the "best" Good-put. For example, if it determines "No", it goes to step 901, and if it determines "Yes", it goes to step 906.

At 906, the node Tx-1 (e.g., node101) determines the delay. For example, if it determines "Yes" (i.e., the delay time>K), it goes to step 907, and if it determines "No", it goes to step 901.

At 907, the node Tx-1 (e.g., node101) waits until the pivot ends.

For example, the node 101 may continue to use the medium for TxOP = $T_m$, if it finishes sending all packets the Tx node 101 keeps using the virtual link by sending IDLE frames. Moreover, if during the TxOP another node 101 accesses the medium, the Pivot node finishes the last Tx and releases the medium.

At 908, the node Tx-1 (e.g., node101) transmits data.

Furthermore, the number of required virtual links and/or nodes 101 may depend on application requirements, deployment type, and medium congestion

The above discussed algorithm may use the following few parameters:

- N: the number of the nodes 101

- P: the required success probability, for example, it may be defined by application QoS requirements.

- $T_m$: minimal transmit period for the node m, for example, it may be determined according to

$$T_m = \sum_{i=0}^{N \neq m} CDF(i, T_m) \geq P .$$

- When the node 101 gains access to the medium of the wireless network, while the Pivot node 101 is active, it may defer from the channel, if the access time difference between the two nodes Km is:

$$K = \sum_{i=0}^{N \neq m, N \neq k} CDF(i, T_{m,k} - K) = TimeThatEnableThe\mathrm{Required}Cuccess\Pr obability . \quad \text{Eq. (2)}$$

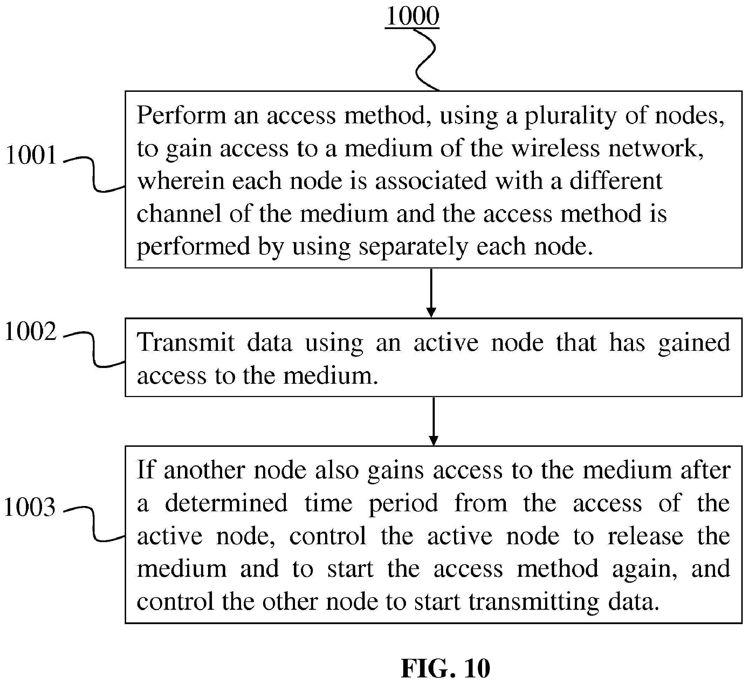

FIG. 10 shows a method 1000 performed by a device 100 for a wireless network 1, according to an embodiment of the invention.

The method 1000 may be carried out by the device 100 (and/or the system 200 and/or the first device 100 of the system 200 and/or the second device 100 of the system 200), as it described above, without limiting the present disclosure.

The method 1000 comprises a step 1001 of performing an access method, using a plurality of nodes 101, 102, 103, to gain access to a medium of the wireless network, wherein each node 101, 102, 103 is associated with a different channel 111, 112, 113 of the medium and the access method is performed by using separately each node 101, 102, 103.

The method 1000 further comprises a step 1002 of transmitting data using an active node 101 that has gained access to the medium.

The method 1000 further comprises a step 1003 of, if another node 102, 103 also gains access to the medium after a determined time period from the access of the active node 101, controlling the active node 101 to release the medium and to starting the access method again, and controlling the other node 102, 103 to start transmitting data.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A device (100) for a wireless network (1), wherein the device comprises a plurality of nodes (101, 102, 103) and is configured to:
   perform a channel access method using the plurality of nodes (101, 102, 103),

   wherein each node (101, 102, 103) is associated with a different channel (111, 112, 113) of a medium of the wireless network and the access method is performed by using separately each node (101, 102, 103),
   control an active node (101) of the plurality of nodes (101, 102, 103) that has gained access to the medium to transmit data, and
   if another node (102, 103) also gains access to the medium after a determined time period from the access of the active node (101), control the active node (101) to release the medium and to start the access method again, and control the other node (102, 103) to start transmitting data,
   wherein the device is **characterized by** being configured to determine an average access delay time for each node (101, 102, 103), wherein the determined time period of the active node (101) is based on the average access delay times of the other nodes (102, 103).

2. The device (100) according to claim 1, further configured to:
   constantly perform the access method with each node (102, 103) that has no access to the medium.

**3.** The device (100) according to claim 1 or 2, further configured to:
delay the release of the medium by the active node (101) and the start of transmitting data using the other node (102, 103), until a current transmission of the active node (101) is complete.

**4.** The device (100) according to one of the claims 1 to 3, further configured to:
delay the release of the medium by the active node (101) and the start of transmitting data using the other node (102, 103), until all node procedures of gaining access to the medium and/or releasing the medium are complete.

**5.** The device (100) according to one of the claims 1 to 4, further configured to:

generate an access Cumulative Distribution Function, CDF, for each node (101, 102, 103) based on its average access delay time, and
share the CDFs among the nodes (101, 102, 103).

**6.** The device (100) according to claim 5, further configured to:
determine whether the determined time period has passed or not based on the CDFs of the nodes (101, 102, 103).

**7.** The device (100) according to one of the claims 1 to 6, further configured to:
determine a transmission time for each node (101, 102, 103), and
control the active node (101) to send "IDLE" frames after the actual data transmission time that is determined for the active node (101) has passed.

**8.** The device (100) according to one of the claims 5 to 7, further configured to:
determine the transmission time for each node (101, 102, 103) based on CDF of other nodes and on an access time reliability requirement.

**9.** The device (100) according to one of the claims 1 to 8, wherein:
the access method is based on a Carrier-Sense Multiple Access with Collusion Avoidance, CSMA/CA, method or ETSI EN 301 893 LBE access method and/or any other LBE access method.

**10.** The device (100) according to one of the claims 1 to 9, wherein:
each node (101, 102, 103) is associated with a virtual link to at least one other device.

**11.** A system (200) comprising:

a first device (100) according to one of the claims 1 to 10, and
a second device (100) according to one of the claims 1 to 10,

wherein each node (101, 102, 103) of the first device (100), which is associated with a given channel (111, 112, 113) of the medium, is connected over a virtual link with a node (101, 102, 103) of the second device (100), which is associated with the same given channel (111, 112, 113).

**12.** A method (1000) comprising:
performing (1001) a channel access method using a plurality of nodes (101, 102, 103), comprised in a device of a wireless network, to gain access to a medium of the wireless network (1),

wherein each node (101, 102, 103) is associated with a different channel (111, 112, 113) of the medium and the access method is performed by using separately each node (101, 102, 103),transmitting (1002) data using an active node (101) of the plurality of nodes (101, 102, 103) that has gained access to the medium, and
if another node (102, 103) also gains access to the medium after a determined time period from the access of the active node (101), controlling (1003) the active node (101) to release the medium and to start the access method again, and controlling (1003) the other node (102, 103) to start transmitting data,
wherein the method is **characterized by**
determining an average access delay time for each node (101, 102, 103), wherein the determined time period of the active node (101) is based on the average access delay times of the other nodes (102, 103).

**Patentansprüche**

1. Vorrichtung (100) für ein drahtloses Netz (1), wobei die Vorrichtung eine Vielzahl von Knoten (101, 102, 103) umfasst und zu Folgendem konfiguriert ist:

   Durchführen eines Kanalzugriffsverfahrens unter Verwendung der Vielzahl von Knoten (101, 102, 103), wobei jeder Knoten (101, 102, 103) einem anderen Kanal (111, 112, 113) eines Mediums des drahtlosen Netzes zugeordnet ist und das Zugriffsverfahren durch separates Verwenden jedes Knotens (101, 102, 103) durchgeführt wird,
   Steuern eines aktiven Knoten (101) der Vielzahl von Knoten (101, 102, 103), der Zugriff auf das Medium erhalten hat, um Daten zu übertragen, und
   wenn ein anderer Knoten (102, 103) nach einer bestimmten Zeitspanne ab dem Zugriff des aktiven Knotens (101) ebenfalls Zugriff auf das Medium erhält, Steuern des aktiven Knotens (101), um das Medium freizugeben und das Zugriffsverfahren erneut zu beginnen, und Steuern des anderen Knotens (102, 103), um mit Übertragen von Daten zu beginnen,
   wobei die Vorrichtung **dadurch gekennzeichnet ist, dass** sie dazu konfiguriert ist, eine durchschnittliche Zugriffsverzögerungszeit für jeden Knoten (101, 102, 103) zu bestimmen, wobei die bestimmte Zeitspanne des aktiven Knotens (101) auf den durchschnittlichen Zugriffsverzögerungszeiten der anderen Knoten (102, 103) basiert.

2. Vorrichtung (100) nach Anspruch 1, die ferner zu Folgendem konfiguriert ist:
   ständiges Durchführen des Zugriffsverfahrens mit jedem Knoten (102, 103), der keinen Zugriff auf das Medium hat.

3. Vorrichtung (100) nach Anspruch 1 oder 2, die ferner zu Folgendem konfiguriert ist:
   Verzögern der Freigabe des Mediums durch den aktiven Knoten (101) und des Beginns des Übertragens von Daten unter Verwendung des anderen Knotens (102, 103), bis eine aktuelle Übertragung des aktiven Knotens (101) abgeschlossen ist.

4. Vorrichtung (100) nach einem der Ansprüche 1 bis 3, die ferner zu Folgendem konfiguriert ist:
   Verzögern der Freigabe des Mediums durch den aktiven Knoten (101) und des Beginns des Übertragens von Daten unter Verwendung des anderen Knotens (102, 103), bis sämtliche Knotenvorgänge zum Erhalten von Zugriff auf das Medium und/oder zum Freigeben des Mediums abgeschlossen sind.

5. Vorrichtung (100) nach einem der Ansprüche 1 bis 4, die ferner zu Folgendem konfiguriert ist:
   Erzeugen einer kumulativen Verteilungsfunktion, CDF, zum Zugriff für jeden Knoten (101, 102, 103) basierend auf dessen durchschnittlicher Zugriffsverzögerungszeit und Aufteilen der CDFs unter den Knoten (101, 102, 103).

6. Vorrichtung (100) nach Anspruch 5, die ferner zu Folgendem konfiguriert ist:
   Bestimmen, ob die bestimmte Zeitspanne verstrichen ist oder nicht, basierend auf den CDFs der Knoten (101, 102, 103).

7. Vorrichtung (100) nach einem der Ansprüche 1 bis 6, die ferner zu Folgendem konfiguriert ist:

   Bestimmen einer Übertragungszeit für jeden Knoten (101, 102, 103) und
   Steuern des aktiven Knotens (101), um "LEERLAUF"-Rahmen zu senden, nachdem die tatsächliche Datenübertragungszeit, die für den aktiven Knoten (101) bestimmt ist, verstrichen ist.

8. Vorrichtung (100) nach einem der Ansprüche 5 bis 7, die ferner zu Folgendem konfiguriert ist:
   Bestimmen der Übertragungszeit für jeden Knoten (101, 102, 103) basierend auf CDFs anderer Knoten und einer Anforderung an die Zuverlässigkeit der Zugriffszeit.

9. Vorrichtung (100) nach einem der Ansprüche 1 bis 8, wobei:
   das Zugriffsverfahren auf einem Verfahren für Mehrfachzugriff mit Trägerprüfung und Kollisionsvermeidung, CSMA/-CA, oder einem LBE-Zugriffsverfahren gemäß ETSI EN 301 893 und/oder einem anderen LBE-Zugriffsverfahren basiert.

10. Vorrichtung (100) nach einem der Ansprüche 1 bis 9, wobei:
    jeder Knoten (101, 102, 103) einer virtuellen Verbindung zu mindestens einer anderen Vorrichtung zugeordnet ist.

**11.** System (200), umfassend:

eine erste Vorrichtung (100) nach einem der Ansprüche 1 bis 10 und
eine zweite Vorrichtung (100) nach einem der Ansprüche 1 bis 10, wobei jeder Knoten (101, 102, 103) der ersten Vorrichtung (100), der einem gegebenen Kanal (111, 112, 113) des Mediums zugeordnet ist, über eine virtuelle Verbindung mit einem Knoten (101, 102, 103) der zweiten Vorrichtung (100), die demselben gegebenen Kanal (111, 112, 113) zugeordnet ist, verbunden ist.

**12.** Verfahren (1000), umfassend:

Durchführen (1001) eines Kanalzugriffsverfahrens unter Verwendung einer Vielzahl von Knoten (101, 102, 103), die in einer Vorrichtung eines drahtlosen Netzes umfasst sind, um Zugriff auf ein Medium des drahtlosen Netzes (1) zu erhalten,
wobei jeder Knoten (101, 102, 103) einem anderen Kanal (111, 112, 113) des Mediums zugeordnet ist und das Zugriffsverfahren durch separates Verwenden jedes Knotens (101, 102, 103) durchgeführt wird, Übertragen (1002) von Daten unter Verwendung eines aktiven Knotens (101) der Vielzahl von Knoten (101, 102, 103), der Zugriff auf das Medium erlangt hat, und
wenn ein anderer Knoten (102, 103) nach einer bestimmten Zeitspanne ab dem Zugriff des aktiven Knotens (101) ebenfalls Zugriff auf das Medium erhält, Steuern (1003) des aktiven Knotens (101), um das Medium freizugeben und das Zugriffsverfahren erneut zu beginnen, und Steuern (1003) des anderen Knotens (102, 103), um mit Übertragen von Daten zu beginnen,
wobei das Verfahren durch Folgendes gekennzeichnet ist Bestimmen einer durchschnittlichen Zugriffsverzögerungszeit für jeden Knoten (101, 102, 103), wobei die bestimmte Zeitspanne des aktiven Knotens (101) auf den durchschnittlichen Zugriffsverzögerungszeiten der anderen Knoten (102, 103) basiert.

**Revendications**

**1.** Dispositif (100) pour un réseau sans fil (1), dans lequel le dispositif comprend une pluralité de nœuds (101, 102, 103) et est configuré pour :

réaliser un procédé d'accès au canal à l'aide de la pluralité de nœuds (101, 102, 103),
dans lequel chaque nœud (101, 102, 103) est associé à un canal différent (111, 112, 113) d'un support du réseau sans fil et le procédé d'accès est réalisé à l'aide de chaque nœud (101, 102, 103) séparément,
commander un nœud actif (101) de la pluralité de nœuds (101, 102, 103) qui a obtenu l'accès au support pour transmettre des données, et
si un autre nœud (102, 103) obtient également l'accès au support après une période de temps déterminée à partir de l'accès du nœud actif (101), commander le nœud actif (101) pour libérer le support et redémarrer le procédé d'accès, et commander l'autre nœud (102, 103) pour commencer à transmettre des données,
dans lequel le dispositif est **caractérisé en ce qu'**il est configuré pour déterminer un temps de retard d'accès moyen pour chaque nœud (101, 102, 103), dans lequel la période de temps déterminée du nœud actif (101) est basée sur les temps de retard d'accès moyens des autres nœuds (102, 103).

**2.** Dispositif (100) selon la revendication 1, également configuré pour :
réaliser en permanence le procédé d'accès avec chaque nœud (102, 103) qui n'a pas accès au support.

**3.** Dispositif (100) selon la revendication 1 ou 2, également configuré pour :
retarder la libération du support par le nœud actif (101) et le début de la transmission de données à l'aide de l'autre nœud (102, 103), jusqu'à ce qu'une transmission en cours du nœud actif (101) soit terminée.

**4.** Dispositif (100) selon l'une des revendications 1 à 3, également configuré pour :
retarder la libération du support par le nœud actif (101) et le début de la transmission de données à l'aide de l'autre nœud (102, 103), jusqu'à ce que toutes les procédures de nœud d'accès au support et/ou de libération du support soient terminées.

**5.** Dispositif (100) selon l'une des revendications 1 à 4, également configuré pour :

générer une fonction de distribution cumulative d'accès, CDF, pour chaque nœud (101, 102, 103) sur la base de son temps de retard d'accès moyen, et
partager les CDF entre les nœuds (101, 102, 103).

6.  Dispositif (100) selon la revendication 5, également configuré pour :
    déterminer si la période de temps déterminée est passée ou non sur la base des CDF des nœuds (101, 102, 103).

7.  Dispositif (100) selon l'une des revendications 1 à 6, également configuré pour :

    déterminer un temps de transmission pour chaque nœud (101, 102, 103), et
    commander le nœud actif (101) pour envoyer des trames « IDLE » après que le temps de transmission de données réel déterminé pour le nœud actif (101) est écoulé.

8.  Dispositif (100) selon l'une des revendications 5 à 7, également configuré pour :
    déterminer le temps de transmission pour chaque nœud (101, 102, 103) sur la base du CDF des autres nœuds et d'une exigence de fiabilité du temps d'accès.

9.  Dispositif (100) selon l'une des revendications 1 à 8, dans lequel :
    le procédé d'accès est basé sur un procédé d'accès multiple avec détection de porteuse et évitement de collision, CSMA/CA, ou un procédé d'accès LBE ETSI EN 301 893 et/ou un quelque autre procédé d'accès LBE.

10. Dispositif (100) selon l'une des revendications 1 à 9, dans lequel :
    chaque nœud (101, 102, 103) est associé à un lien virtuel vers au moins un autre dispositif.

11. Système (200) comprenant :

    un premier dispositif (100) selon l'une des revendications 1 à 10, et
    un second dispositif (100) selon l'une des revendications 1 à 10,
    dans lequel chaque nœud (101, 102, 103) du premier dispositif (100), qui est associé à un canal donné (111, 112, 113) du support, est connecté par le biais d'une liaison virtuelle à un nœud (101, 102, 103) du second dispositif (100), qui est associé au même canal donné (111, 112, 113).

12. Procédé (1000) comprenant :

    la réalisation (1001) d'un procédé d'accès à un canal à l'aide d'une pluralité de nœuds (101, 102, 103), compris dans un dispositif d'un réseau sans fil, pour obtenir l'accès à un support de réseau sans fil (1),
    dans lequel chaque nœud (101, 102, 103) est associé à un canal différent (111, 112, 113) du support et le procédé d'accès est réalisé à l'aide de chaque nœud (101, 102, 103) séparément, la transmission (1002) des données à l'aide d'un nœud actif (101) de la pluralité de nœuds (101, 102, 103) qui a obtenu l'accès au support, et
    si un autre nœud (102, 103) obtient également l'accès au support après une période de temps déterminée à partir de l'accès du nœud actif (101), la commande (1003) du nœud actif (101) pour libérer le support et redémarrer le procédé d'accès, et la commande (1003) de l'autre nœud (102, 103) pour commencer à transmettre des données,
    dans lequel le procédé est **caractérisé par**
    la détermination d'un temps de retard d'accès moyen pour chaque nœud (101, 102, 103), dans lequel la période de temps déterminée du nœud actif (101) est basée sur les temps de retard d'accès moyens des autres nœuds (102, 103).

**FIG. 1**

**FIG. 2**

**FIG. 3**

EP 3 967 098 B1

**FIG. 4**

**FIG. 5**

FIG. 6

EP 3 967 098 B1

EP 3 967 098 B1

FIG. 7

Data Frame
Rx Queue

Application Data

$\underline{100}$

$\underline{101}$

Rx node 1  Rx node 2  Rx node 3  ...  Rx node N

$102$

$103$

$\underline{200}$

$111$  Channel $C_1$

$112$  Channel $C_2$

$113$  Channel $C_3$

Channel $C_N$

**FIG. 8**

$101$  $102$  $103$

Tx node 1  Tx node 2  Tx node 3  ...  Tx node N

Data Frame
Tx Queue

$\underline{100}$

Application Data

**FIG. 9**

1001 — Perform an access method, using a plurality of nodes, to gain access to a medium of the wireless network, wherein each node is associated with a different channel of the medium and the access method is performed by using separately each node.

1002 — Transmit data using an active node that has gained access to the medium.

1003 — If another node also gains access to the medium after a determined time period from the access of the active node, control the active node to release the medium and to start the access method again, and control the other node to start transmitting data.

**FIG. 10**

EP 3 967 098 B1

**FIG. 11**

**EP 3 967 098 B1**

## REFERENCES CITED IN THE DESCRIPTION

**Patent documents cited in the description**

- US 2004002357 A1